(19) Europäisches Patentamt
European Patent Office
Office européen des brevets

(11) EP 4 484 613 A1

(12) EUROPEAN PATENT APPLICATION

(43) Date of publication:
01.01.2025 Bulletin 2025/01

(21) Application number: 23209049.8

(22) Date of filing: 10.11.2023

(51) International Patent Classification (IPC):
C25B 1/042 (2021.01)      C25B 9/77 (2021.01)
C25B 15/08 (2006.01)

(52) Cooperative Patent Classification (CPC):
C25B 1/042; C25B 9/77; C25B 15/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2023 KR 20230083912

(71) Applicants:
• HYUNDAI MOTOR COMPANY
Seoul 06797 (KR)
• Kia Corporation
Seocho-gu
Seoul 06797 (KR)

• H-Cube Solutions
Seoul 03722 (KR)

(72) Inventors:
• CHU, In Chang
Seoul (KR)
• HONG, Jong Sup
Seoul (KR)
• LIM, Jang Hyun
Seoul (KR)

(74) Representative: Viering, Jentschura & Partner
mbB
Patent- und Rechtsanwälte
Am Brauhaus 8
01099 Dresden (DE)

(54) FUEL SUPPLY CONTROL DEVICE FOR ELECTROCHEMICAL CELL

(57) The present disclosure relates to a fuel supply control device for an electrochemical cell capable of uniformly distributing fuel supplied to the electrochemical cell and supplying the same. The device includes: a separator disposed on one side of an electrochemical cell, and having a fuel inlet, a fuel outlet, and a plurality of fuel channels arranged between the fuel inlet and the fuel outlet; and a fuel supply control panel stacked between the separator and the electrochemical cell, and having a plurality of slits arranged in a longitudinal direction of the fuel channel. A channel width of the fuel channel may be changed in the longitudinal direction of the fuel channel.

FIG. 1

**Description**

**TECHNICAL FIELD**

The present disclosure relates to a fuel supply control device for an electrochemical cell capable of uniformly distributing fuel supplied to the electrochemical cell and supplying the same.

**BACKGROUND**

A water electrolysis system using a solid oxide cell is a device for separating water into hydrogen and oxygen by an electrochemical reaction. If an electrochemical reaction in the water electrolysis system is powered with eco-friendly renewable energy (e.g., solar energy, wind energy, surplus power and/or energy, or the like), hydrogen can be produced without environmental pollution. Using surplus power may improve utilization of renewable energy.

A water electrolysis system using a solid oxide cell may use a stack for water electrolysis. The stack may comprise a plurality of unit cells for hydrogen production. The unit cell, of the water electrolysis stack and hereinafter referred to as an electrochemical cell, may include an electrolyte membrane capable of moving oxygen ions, and a fuel electrode and an air electrode sintered on opposing surfaces of the electrolyte membrane, respectively.

An electrochemical reaction of the electrochemical cell may occur at a reaction interface between the fuel electrode and the air electrode, and fuel (e.g., water vapor) supplied to the fuel electrode may receive electrons via an external circuit and a power supply device. The fuel (e.g., water vapor) may be electrolyzed (e.g., into oxygen ions and hydrogen) to produce hydrogen. The non-hydrogen ions (e.g., Oxygen ions for water vapor) may move to the air electrode via the electrolyte membrane and be discharged.

A separator may be stacked on both sides of the electrochemical cell. Fuel may be supplied to the electrochemical cell via a fuel channel in the separator on one side thereof. However, since reactivity of the conventional electrochemical cell upstream of the fuel channel is higher than that downstream of the fuel channel, most of the electrochemical reaction may be concentrated near an inlet of the fuel channel. This may lower stability of the electrochemical cell, resulting in deterioration of the electrochemical cell.

**SUMMARY**

The following summary presents a simplified summary of certain features. The summary is not an extensive overview and is not intended to identify key or critical elements.

Systems, apparatuses, and methods are described for a fuel supply control device. A fuel supply control device, for an electrochemical cell, may comprise a separator disposed on one side of an electrochemical cell, wherein a fuel inlet, a fuel outlet, and a plurality of fuel channels are formed in the separator, wherein the plurality of fuel channels are arranged to extend between the fuel inlet and the fuel outlet; and a fuel supply control panel stacked between the separator and the electrochemical cell, wherein a plurality of slits are formed in the fuel supply control panel and arranged in a longitudinal direction of the plurality of fuel channels. One or more fuel channels of the plurality of fuel channels may have a channel width that changes in a longitudinal direction of the one or more of the fuel channels.

Also, or alternatively, a fuel supply control device, for an electrochemical cell, may comprise a separator disposed on one side of an electrochemical cell, wherein a fuel inlet, a fuel outlet, and a plurality of fuel channels are formed in the separator, wherein the plurality of fuel channels are arranged to extend between the fuel inlet and the fuel outlet; and a fuel supply control panel stacked between the separator and the electrochemical cell, wherein a plurality of slits are formed in the fuel supply control panel and arranged in a longitudinal direction of the plurality of fuel channels. The plurality of fuel channels extend in a first direction, the plurality of slits extend in a second direction, the first direction and the second direction are not parallel to each other, and the plurality of fuel channels intersect with the plurality of slits. At least one of a channel width of a fuel channel of the plurality of fuel channels, a plurality of slit widths of the plurality of slits, or a plurality of distances between adjacent slits of the plurality of slits changes in the longitudinal direction of the fuel channels.

These and other features and advantages are described in greater detail below.

**BRIEF DESCRIPTION OF DRAWINGS**

The above and other aspects, features, and advantages of the present disclosure will be more clearly understood from the following detailed description, taken in conjunction with the accompanying drawings, in which:

FIG. 1 is an exploded perspective view of a fuel supply control device for an electrochemical cell according to an example of the present disclosure;
FIG. 2 is an assembled perspective view of a fuel supply control device for an electrochemical cell according to an example of the present disclosure;

FIG. 3 is a plan view of a fuel supply control device for an electrochemical cell according to an example of the present disclosure;

FIG. 4 is a perspective view of a separator;

FIG. 5 is a plan view of a fuel supply control panel;

FIG. 6 is a diagram of a flow state of fuel in a fuel supply control device for an electrochemical cell according to an example of the present disclosure;

FIG. 7 is a cross-sectional view of an electrochemical cell equipped with a fuel supply control device according to an example of the present disclosure; and

FIG. 8 is an exploded perspective view of a fuel supply control device for an electrochemical cell according to another example of the present disclosure.

## DETAILED DESCRIPTION

Specific structural and/or functional descriptions presented in the present disclosure are merely for the purpose of illustrating examples of the concept of the present disclosure. Examples according to the concept of the present disclosure may be implemented in various forms.

In addition, throughout this specification, if a certain part and/or method "includes," "has," "comprises," etc., a certain component and/or step, the certain part and/or method may further include other components and/or steps unless otherwise stated.

Terms such as "first" and/or "second" may be used to describe various components, but the components are not limited to the above-described terms. The above-described terms are only used to distinguish a component from another component. For example, without departing from the scope of rights according to the present disclosure, a first component may be named a second component, and similarly, a second element may be named a first component.

Hereinafter, the present disclosure will be described in detail with reference to exemplary drawings. Reference numerals corresponding to components of each drawing indicated the same components in different drawings.

The water electrolysis system may be able to secure clean hydrogen due to advantages such as high efficiency, high purity of generated hydrogen, high explosion stability, and the like.

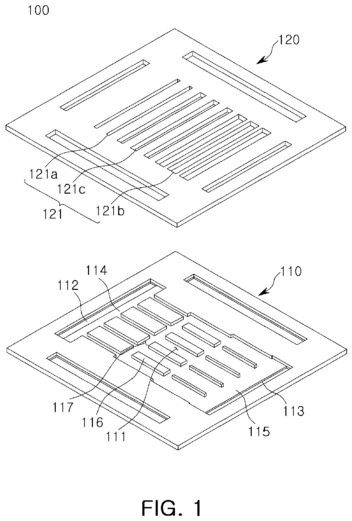

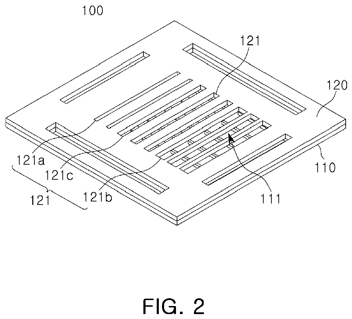

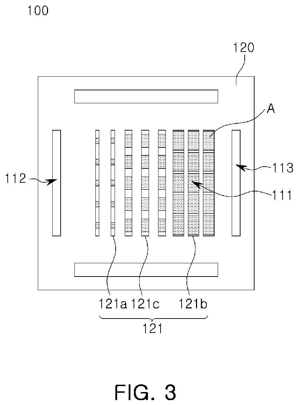

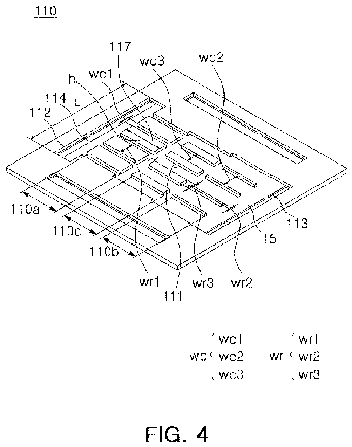

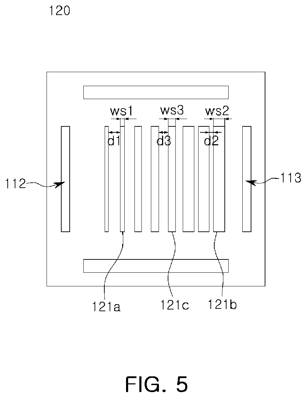

FIG. 1 is an exploded perspective view illustrating a fuel supply control device of an electrochemical cell according to an example of the present disclosure, and FIGS. 2 and 3 are an assembled perspective view and a plan view illustrating a fuel supply control device for an electrochemical cell according to an example of the present disclosure. In addition, FIG. 4 is a perspective view illustrating a separator, and FIG. 5 is a plan view illustrating a fuel supply control panel.

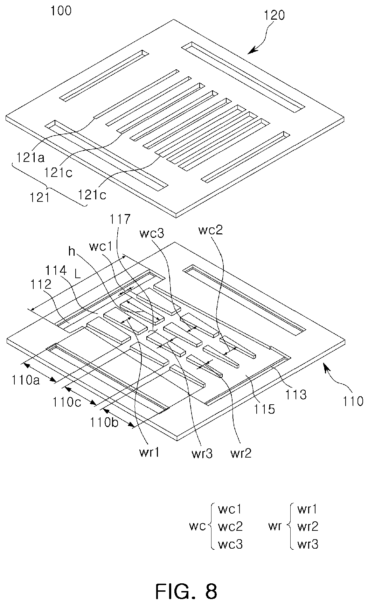

Uniformly controlling a flow rate of fuel supplied to an electrochemical cell (e.g., electrochemical cell 200 in FIG. 8) may induce a uniform electrochemical reaction in active reaction sites of the electrochemical cell (e.g., all active reaction sites). The uniform electrochemical reaction across active reaction sites may reduce a deviation in reaction for each site of the electrochemical cell, ensure stability of the electrochemical cell and improve performance over short- and long-term operation.

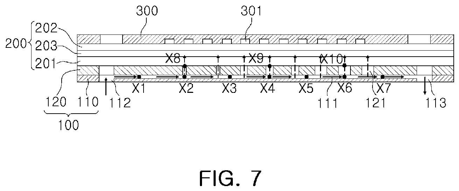

A fuel supply control device 100 for an electrochemical cell 200 (e.g., as in FIG. 7) may be configured to uniformly control a flow rate of fuel supplied to an electrochemical cell 200. The electrochemical cell 200 may be a unit cell (e.g., a water electrolysis cell) of a stack for water electrolysis. Such an electrochemical cell 200 may use steam and/or a mixture of steam and hydrogen as fuel.

As shown in FIGS. 1 to 3, the fuel supply control device 100 may include a separator 110 and a fuel supply control panel 120.

The separator 110 may comprise a flat plate (e.g., having a predetermined thickness). The separator 110 may be stacked and/or disposed on one surface of the electrochemical cell 200.

As shown in FIGS. 1 and 4, the separator 110 may have a plurality of fuel channels 111 on one surface thereof. In this case, one surface of the separator 110 is an inner surface facing the electrochemical cell 200. The fuel channels 111 may be formed on an inner surface of the separator 110 (e.g., a surface of the separator configured to face the electrochemical cell 200).

The fuel channels 111 may be in a form of recessed grooves in the inner surface of the separator 110. The fuel channels 111 may have a predetermined length, width and/or depth.

The fuel channels 111 may be arranged at a predetermined distance from each other. For example, the fuel channels 111 may be arranged at equal distances from each other. The fuel channels 111 (e.g., all of the fuel channels 111) may have the same channel width wc, but the present disclosure is not limited thereto. Also, or alternatively, the fuel channels 111 may be arranged parallel to each other, and all of the fuel channels 111 may have the same length.

A rib 116 may be disposed between the fuel channels 111, respectively. A fuel channel may be between the ribs. A rib width wr of the rib 116 may correspond to a distance between the fuel channels 111. All of the ribs 116 may have the same rib width, but the present disclosure is not limited thereto.

If the fuel supply control panel 120 is stacked on the separator 110, the plurality of ribs 116 may adhere to a surface of the fuel supply control panel facing the separator 110.

The separator 110 may have a fuel inlet 112 and a fuel outlet 113 disposed adjacent to either end of the fuel channels 111. The fuel inlet 112 and the fuel outlet 113 may have a hole structure (e.g., having a predetermined length L (see FIGs. 4 and 8) and width). Dimensions of the hole structure of the fuel inlet 112 may be the same as or different from the hole structure of the fuel outlet 113. The plurality of fuel channels 111 may be disposed between a fuel inlet 112 and a fuel outlet 113.

A direction in which fuel flows from the fuel inlet 112 to the fuel outlet 113 may be defined as a longitudinal direction of the separator 110, and a direction, orthogonal to the longitudinal direction may be defined as a width direction of the separator 110.

The fuel channels 111 may extend in the longitudinal direction of the separator 110. Also, or alternatively, the fuel channels 111 may be arranged at predetermined intervals in the width direction of the separator 110.

The fuel inlet 112 and the fuel outlet 113 may extend (e.g., have a length dimension) in the width direction of the separator 110. As a result, the fuel inlet 112 and the fuel outlet 113 may extend (e.g., be elongated) in a direction, orthogonal to the fuel channels 111. The fuel inlet 112 and the fuel outlet 1113 may be disposed adjacent to both ends in a longitudinal direction of the fuel channels 111.

A first stepped surface portion 114 may be provided between the fuel inlet 112 and the fuel channels 111. Also, or alternatively, a second stepped surface portion 115 may be provided between the fuel outlet 113 and the fuel channels 111.

Each of the stepped surface portions 114 and 115 may be a recess formed on the inner surface of the separator 110. The stepped surface portions 114 and 115 may have the same depth as the fuel channels 111.

The fuel inlet 112 may be formed adjacent to one end of the fuel channels 111 near the first stepped surface portion 114. Also, or alternatively, the fuel outlet 113 may be formed adjacent to the other end of the fuel channels 111 near the second stepped surface portion 115.

The fuel inlet 112 and the fuel outlet 113 may be disposed to face each other with the fuel channels 111 interposed therebetween. Also, or alternatively, the fuel inlet 112 and the fuel outlet 113 may be symmetrical with respect to the fuel channels 111.

The fuel inlet 112 and the fuel outlet 113 may extend at least to positions of the outermost of the fuel channels 111.

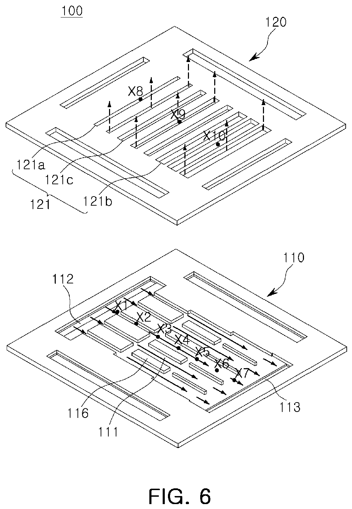

Fuel supplied to the fuel inlet 112 may flow into the fuel channels 111 via the first stepped surface portion 114 (refer to the arrow in FIG. 6). The fuel flowing into the fuel channels 111 may be supplied to the electrochemical cell 200 via the fuel supply control panel 120 by passing through the fuel channels 111. Fuel not supplied to the electrochemical cell may be discharged to the fuel outlet 113.

In the fuel supply control device 100, the channel width wc of the fuel channel 111 may be different at different positions in the longitudinal direction of the fuel channel 111, that is, in the longitudinal direction of the separator 110.

For each fuel channel 111, a channel width wc1 of a first section 110a located relatively close to the fuel inlet 112 may be smaller than a channel width wc2 of a second section 110b located relatively close to the fuel outlet 113. Also, or alternatively, the channel width wc1 of the first section may be smaller than a channel width wc3 of a third section 110c located between the first section and the second section of the fuel channel 111. The channel width wc2 of the second section may be greater than the channel width wc3 of the third section.

The first section, the second section, and the third section in each fuel channel 111 may have a same length h, but the present disclosure is not limited thereto.

Two or more of a plurality of sections of each fuel channel 111 may have different channel widths wc. The channel widths of the sections may increase in a stepwise manner from the fuel inlet 112 to the fuel outlet 113. In other words, the channel width in each fuel channel 111 may be narrower closer to the fuel inlet and wider closer to the fuel outlet.

Also, or alternatively, a rib width wr corresponding to the first to third sections 110a to 110c in each rib 116 between adjacent fuel channels 111 may be different in the longitudinal direction of the fuel channel, that is, in the longitudinal direction of the separator 110.

In a rib 116 (e.g., in each of the ribs 116), a rib width wr1 of the first section 110a located relatively close to the fuel inlet 112 may be greater than a rib width wr2 of the second section 110b located relatively close to the fuel outlet 113. Also, or alternatively, the rib width wr1 of the first section may be greater than a rib width wr3 of the third section 110c located between the first section and the second section of the rib. The rib width wr2 of the second section may be smaller than the rib width wr3 of the third section.

In each rib 116, the first section, the second section, and the third section may have the same length h, but the present disclosure is not limited thereto.

Two or more of a plurality of sections of each rib 116 may have different rib widths wr, and the rib widths of the sections may decrease in a stepwise manner from the fuel inlet 112 to the fuel outlet 113. In other words, the rib width in each rib 116 may be wider closer to the fuel inlet 112 and narrower closer to the fuel outlet 113.

In this case, a relationship between the length L of the fuel inlet 112 and the channel width wc for the rib width wr in each section may be determined by Equation 1 below.

$$wci = \frac{L-(n \times wri)}{n+1}$$

[Equation 1]

where, wci represents a channel width (e.g., in mm) in an $i^{th}$ section, L represents a length (e.g., in mm) of the fuel inlet 112, n represents the number of ribs 116, and wri represents a rib width (e.g., in mm) in the $i^{th}$ section. This relational expression may mean that as the rib width wr decreases, the channel width wc increases. A frictional loss coefficient of the fuel channel (e.g., a flow path) may be determined by the size and shape of the fuel channel 111, which may be different in each section.

Accordingly, in the first section 110a, located relatively close to the fuel inlet 112 and having a larger rib width wr and a smaller channel width wc, a flow velocity of fuel in the fuel channel 111 may be greater and the pressure drop may be greater (e.g., relative to a section further from the fuel inlet 112, such as the second section 110b or the third section 110c).

Conversely, in the second section 110b, located relatively close to the fuel outlet 113 and having a smaller rib width wr and a larger channel width wc, a flow velocity of the fuel in the fuel channel 111 may be less and the pressure drop may be lower (e.g., relative to a section further from the fuel outlet 113, such as the first section 110a or the third section 110c).

Therefore, in order to uniformly supply fuel at a reaction interface of the electrochemical cell 200, the pressure drop in each slit 121 provided in the fuel supply control panel 120 may be shared in the fuel channel 111 of the separator 110. Since the pressure drop in the separator 110 may be greater closer to the fuel inlet 112 and lower close to the fuel outlet, a size of each slit 121 provided in the fuel supply control panel 120, for example, can be increased, and a distance between the slits 121 may be narrowed, towards the fuel outlet 113.

The separator 110 may further include at least one cross channel 117 across a plurality of fuel channels to allow for fuel to flow between the plurality of fuel channels 111.

The cross channel 117 may have a recessed form on an inner surface of the separator 110. The cross channel 117 may have a predetermined length, width and/or depth.

The cross channel 117 may extend in the width direction of the separator 110. Also, or alternatively, the cross channel 117 may cross and/or demarcate each fuel channel 111. Moreover, the cross channel may separate sections having different rib widths wr in each rib 116.

The plurality of fuel channels 111 may communicate with each other via the cross channel 117. The communication (e.g., flow of fuel) between the fuel channels 111 may allow the separator 110 to more uniformly control a flow rate of fuel supplied to the electrochemical cell 200.

A fuel supply control panel 120 may be stacked and/or disposed on the inner surface of the separator 110. The fuel supply control panel 120 may be configured to uniformly distribute and/or deliver the fuel flowing through the fuel channels 111 throughout the reaction site(s) of the electrochemical cell 200.

The fuel supply control panel 120 may be formed of a flat plate having a predetermined thickness, and/or may be stacked and/or disposed on the inner surface of the separator 110.

As shown in FIGS. 1 to 3 and 5, the fuel supply control panel 120 may include a plurality of slits 121 formed therein. The plurality of slits 121 may allow for controlling a flow rate of fuel supplied to the electrochemical cell 200.

The slits 121 may be formed in the fuel supply control panel 120 using Computerized Numerical Control (CNC) processing, punching processing, laser processing, etching processing, and the like.

The slits 121 may be formed through the fuel supply control panel 120 in a thickness direction. The slits may be formed in an elongate hole structure (e.g., rectangle, oval, etc.) having a predetermined length and slit width ws.

The slits 121 may be arranged at a distance d from each other in a longitudinal direction of the fuel channels 111, that is, in the longitudinal direction of the separator 110. Also, or alternatively, the slits 121 may be arranged parallel to each other. In an example, all slits 121 may have the same length.

Each slit 121 may have a length extending in a direction in which the fuel channels 111 are arranged (e.g., in a width direction of the separator 110). Each slit may extend in a direction orthogonal to the fuel channels of the separator. Also, or alternatively, each slit may extend to be able to communicates with (e.g., for a contiguous space with) the outermost fuel channels 111.

Each slit 121 may have a slit width ws extending in the longitudinal direction of the fuel channels 111, that is, in the longitudinal direction of the separator 110. Among the slits 121, a slit 121, located relatively close to the fuel inlet 112 may have a smaller slit width than a slit 121, located relatively far from the fuel inlet 112. In other words, the slit width of the slits 121 may increase from the fuel inlet 112 to the fuel outlet 113.

A slit width ws1 of one of more first slits 121a, located relatively close to the fuel inlet 112 may be smaller than a slit width ws2 of second slits 121b located relatively close to the fuel outlet 113. Also, or alternatively, the slit width ws1 of the first slits 121a is smaller than a slit width ws3 of third slits 121c located between the first slits 121a and the second slits 121b. The slit width ws2 of the second slits 121b may be greater than the slit width ws3 of the third slits 121c.

In an example, the plurality of first slits 121a may have the same slit width ws1 as each other, and the plurality of second slits 121b may have the same slit width ws2 as each other. Also, or alternatively, the plurality of third slits 121c may have the same slit width ws3 as each other.

As described above, at least two or more of the plurality of slits 121 may have different slit widths ws, and a portion of the slits 121 (e.g., first slits 121a, second slits 121b and/or third slits 121c) may have the same slit width as others in the portion of the slits 121. In an example, all of the slits may have different slit widths.

The first slits 121a may be located to correspond to the first section 110a of each fuel channel 111 of the separator 110, and the second slits 121b may be located to correspond to the second section 110b of each fuel channel of the separator 110. Also, or alternatively, the third slits 121c may be located to correspond to the third section 110c of each fuel channel of the separator.

In other words, if the plurality of slits 121 of the fuel supply control panel 120 are formed to have, for example, three slit widths ws, each fuel channel 111 of the separator 110 may be divided into three sections having different channel widths, so as to each correspond to sets of slits 121 having the same slit width.

Also, or alternatively, a length h, extending in a longitudinal direction of a separator 110, in each section of the separator 110 may be determined to cover the slits 121 having the same slit width ws in the fuel supply control panel 120.

If the fuel supply control panel 120 is stacked on the separator 110, the fuel channels 111 and the slits 121 may be orthogonal to each other. The fuel channels 111 and slits being arranged orthogonal to each other may result in an effective supply area A in which the fuel channels 111 and the slits 121 overlap, as shown in FIG. 3.

The fuel supply control panel 120 having such slits 121 may uniformly distribute, via the slits 121, fuel passing through the fuel channels 111 of the separator 110 (e.g., to supply the fuel to the electrochemical cell 200).

Also, or alternatively, a distance d between adjacent slits 121 may decrease in a direction the fuel inlet 112 to the fuel outlet 113. In other words, the distance between the slits 121 may be wider closer to the fuel 112 and narrower closer to the fuel outlet 113.

A distance d1 between the first slits 121a, located relatively close to the fuel inlet 112 may be greater than a distance d2 between the second slits 121b, located relatively close to the fuel outlet 113. Also, or alternatively, the distance d1 between the first slits 121a may be greater than a distance d3 between the third slits 121c, located between the first slits 121a and the second slits 121b. The distance d2 between the second slits 121b may be smaller than the distance d3 between the third slits 121c.

Among the distances d between the slits 121, the distances between sets of the slits 121 having the same slit width ws may have the same size. However, if three or more of the plurality of slits 121 have different slit widths ws, the distance between at least two thereof may have different sizes. Although not shown in the drawings, as another modified example, the distances between the slits may all be different.

The slits 121 as described herein may allow for the supply control device 100 to more uniformly control a flow rate of the fuel supplied to the electrochemical cell 200.

By the distance d between the slits 121 disposed towards the fuel outlet 113, where the fuel flow rate is relatively slow, being small compared to the distance d between the slits 121 disposed towards the fuel inlet 112, where the fuel flow rate is relatively high, a decrease in the flow rate of fuel delivered to the electrochemical cell 200 downstream of the fuel channels 111 may be reduced and/or avoided.

In a fuel supply control device 100 comprising the fuel supply control panel 120 stacked on the separator 110, such that the fuel channels 111 and the slits 121 are orthogonal to each other, fuel flowing into the fuel channels 111 may flow and/or be supplied to the electrochemical cell 200 via an effective supply area A at which the fuel channels 111 and the slits 121 overlap.

In the fuel inlet 112, a smaller effective supply area A increases flow resistance, so the effective supply area can be effectively reduced by increasing the rib width wr of the rib 116 between the fuel channels 111 without changing the slit width ws of the slit 121.

In the fuel outlet 113, the pressure drop may be reduced by disposing low flow resistance, and the effective supply area A may be increased by increasing the channel width of the fuel channel 111.

FIG. 6 is a diagram showing a flow state of fuel in the fuel supply control device for an electrochemical cell according to an example of the present disclosure.

In FIG. 6, in order to indicate a flow rate/direction of fuel supplied to the electrochemical cell 200 with arrows, the fuel supply control panel 120 and the separator 110 are shown in a separated state, with an electrochemical cell omitted. One skilled in the art will understand the fuel supply control panel 120 is stacked on the separator 110 and disposed between the electrochemical cell 200 and the separator 110.

In FIG. 6, arrows indicated by solid lines indicate a flow of fuel in a fuel inlet 112, a fuel outlet 113 and a fuel channel 111, and arrows indicated by dotted lines indicate a flow rate of fuel flowing from the fuel channel 111 to the electrochemical cell 200 through the fuel supply control panel 120.

Also, or alternatively, in FIG. 6, in order to explain the pressure drop of fuel supplied to the electrochemical cell 200, points 1 to 7 (X1~X7) are indicated on the separator 110, and points 8 to 10 (X8~X10) are indicated on the fuel supply control panel 120.

If the fuel supply control panel 120 is stacked and disposed between the electrochemical cell 200 and the separator 110, the pressure drop may decrease due to the flow velocity and a frictional loss of the fuel supplied to the fuel supply control panel 120 decreasing (e.g., due to the relatively narrow channel width wc1) longitudinally (e.g., from upstream to downstream) for each fuel channel 111 (e.g., from the first section 110a down to the third section 110c and the second section 110b).

Moreover, in the fuel supply control panel 120, the flow rate of fuel supplied to the electrochemical cell 200 from the first slits 121a (e.g., having a relatively narrow slit width ws1) may be lower than that of the second slits 121b and the third slits 121c.

Accordingly, the flow rates of fuel through the third slits 121c and the second slits 121b may be increased the increased flow rates through the third section 110c and the second section 110b of each fuel channel 111, thereby uniformizing the flow rate of fuel supplied to an active reaction site of the electrochemical cell 200.

By controlling the flow rate of fuel supplied in this manner, a composition of the fuel may be uniformly distributed at a reaction interface of the electrochemical cell, and as a result, an electrochemical reaction may occur uniformly as a whole at the reaction interface.

In terms of the pressure drop of the fuel, in the separator 110, a channel width wc of each fuel channel 111 increases towards the fuel outlet 113, so that the fuel flowing thereinto from the fuel inlet 112 passes quickly upstream in the fuel channels 111 and flows relatively slowly downstream in the fuel channels 111. Since the pressure drop may be greater upstream in the fuel channels 111 than downstream, the separator 110 and the fuel supply control panel 120 share the pressure drop together.

In the fuel supply control panel 120, the slit width ws of the slits 121 increases towards the fuel outlet 113, so that a flow of fuel in a thickness direction may be limited upstream in the fuel channels 111 and the flow of fuel in the thickness direction may be relatively increased downstream in the fuel channels 111. Here, the flow of the fuel in the thickness direction is a flow in a direction in which the separator 110 and the fuel supply control panel 120 are stacked, which is the flow of fuel moving from the fuel channel 111 of the separator 110 to and/or through the fuel supply control panel 120.

If a difference in pressure between point i and point j is $\Delta P_{i.j} = P_i - P_j$, the pressure drop due to the frictional loss generated in each fuel channel 111 of the separator 110 may have a relationship of $\triangle P_{1.3} > \triangle P_{3.5} > \triangle P_{5.7}$. Also, or alternatively, the pressure drop due to the frictional loss generated in each slit 121 of the fuel supply control panel 120 may have a relationship of $\triangle P_{2.8} > \triangle P_{4.9} > \triangle P_{6.10}$.

If the fuel flows from the fuel inlet 112 to the point i in each fuel channel 111 of the separator 110, and then passes through the slit 121 at the point j of the fuel supply control panel 120 corresponding to the point i and supplied to the electrochemical cell 200, final pressure of the fuel may be expressed by Equation 2.

$$P_{cell,j} = P_1 - \left( \sum_{k=1}^{i} \triangle P_{channel,k.i} + \triangle P_{slit,i,j} \right)$$ [Equation 2]

Here, $\triangle P_{cell,j}$ represents final pressure (Pa) of fuel supplied to the electrochemical cell 200, P1 represents pressure (Pa) of the fuel supplied from point 1, $\triangle P_{channel,k.i}$ represents pressure drop (Pa) generated in the fuel channel 111, and $\triangle P_{cslit,i.j}$ represents pressure drop (Pa) generated in the slit 121.

For example, the final pressure of the fuel supplied to the electrochemical cell 200 at point 8 may be calculated as $P_8 = P_1 - (\triangle P_{1.2} + \triangle P_{2.8})$. The final pressure at point 9 may be calculated as $P_9 = P_3 - (\triangle P_{3.4} + \triangle P_{4.9})$, and the final pressure at point 10 may be calculated as $P_{10} = P_5 - (\triangle P_{5.6} + \triangle P_{6.10})$. In this case, the final pressures calculated at the points 8 to 10 may be equal to each other.

Since the pressure drop at each point may be determined by variables according to a shape and size of each section of the fuel channel 111 and the slit 121, the shape and size of each section of the fuel channel and the slit may be appropriately adjusted so that distribution of the pressure of the fuel supplied to the electrochemical cell 200 may be substantially uniform.

The fuel supply control device 100 for an electrochemical cell according to an example of the present disclosure may uniformly control a mass flux per unit area of the fuel (e.g., water vapor) supplied to the electrochemical cell 200 as a whole, thereby improving a deviation in distribution of the fuel partial pressure in an active reaction site of the electrochemical cell and uniformly forming a reversible voltage of the electrochemical cell.

Also, or alternatively, the pressure drop in the fuel supply control panel 120 may be reduced as much as the pressure drop generated in the separator 110. The slit width ws of the slit 121 may be wider, and the distance d between the slits may be narrower.

As such, the slit 121 having a wider slit width ws may be disposed, which means manufacturing convenience is improved, and thus, processing costs may be reduced.

FIG. 7 is a cross-sectional view illustrating an electrochemical cell equipped with a fuel supply control device according to an example of the present disclosure.

As illustrated in FIG. 7, an electrochemical cell 200 equipped with the fuel supply control device 100 according to an example of the present disclosure may include a fuel electrode 201, an air electrode 202, and an electrolyte membrane 203 interposed between the fuel electrode and the air electrode.

The fuel supply control device 100 according to an example of the present disclosure may be mounted on the fuel electrode 201 of the electrochemical cell 200. The fuel supply control panel 120 may be disposed adjacent to the fuel electrode 201, and stacked between the separator 110 and the fuel electrode 201.

A plate 300 may be mounted on the air electrode 202, and oxygen decomposed in the electrochemical cell 200 may be discharged through the plate. To this end, the plate may have a plurality of channels 301 on one surface.

Alternatively, the fuel supply control device 100 according to an example of the present disclosure may be respectively disposed on both sides of the electrochemical cell 200. In this case, in the fuel supply control device 100 disposed on a side of the air electrode 202, one surface of the separator 110 may be in close contact with a fuel electrode of another electrochemical cell via the fuel supply control panel 120, while a channel for the air electrode may be provided on the other surface of the separator and the other surface thereof may be in close contact with the air electrode.

The fuel supply control panel 120 uniformly spreads fuel flowing from the fuel channel 111 of the separator 110 and supplies the fuel to the electrochemical cell 200. In this case, the fuel is supplied to a fuel electrode 201 of the electrochemical cell. As indicated by a dotted line arrow in FIG. 7, fuel is uniformly supplied throughout a reaction site of the fuel electrode, and thus the distribution of the electrochemical reaction becomes uniform at the reaction interface between the fuel electrode 201 and the electrolyte membrane 203.

If fuel is supplied to the fuel electrode 201, water vapor in the fuel is decomposed into oxygen ions and hydrogen by receiving electric power, and the oxygen ions move to the air electrode 202 through the electrolyte membrane 203. The oxygen ions moved to the air electrode 202 may be combined with electrons and discharged as oxygen.

FIG. 8 is an exploded perspective view illustrating a fuel supply control device for an electrochemical cell according to another example of the present disclosure.

As illustrated in FIG. 8, a fuel supply control device 100 for an electrochemical cell according to another example of the present disclosure may include a separator 110 and a fuel supply control panel 120.

In another example shown in FIG. 8, only the shape of the fuel channel 111 in the separator 110 is different, and the other components are the same as those of the example shown in FIGS. 1 to 7. While the fuel channel in the separator of the previous example described above have a rectangular cross-sectional shape, the fuel channel in the separator of another example shown in FIG. 8 may have a trapezoidal cross-sectional shape.

In the fuel supply control device 100, a channel width wc of the fuel channel 111 may be different (e.g., change, have different values at different positions) in a longitudinal direction of the fuel channel 111, that is a longitudinal direction of the separator 110.

A channel width wc1 of a first section 110a located relatively close to the fuel inlet 112 in each fuel channel 111 is smaller than a channel width wc3 of a second section 110b located relatively close to the fuel outlet 113.

The channel widths wc1 and wc2 of the first section 110a and the second section 110b may be gradually varied.

For example, one end of the first section 110a in a longitudinal direction, located relatively close to the fuel inlet 112, may have a narrow channel width (e.g., the narrowest for the first section 110a). As a distance from the fuel inlet 112 increases, the channel width wc1 of the first section 110a may (e.g., gradually) increase. The other end of the first section 110a in the longitudinal direction, located relatively far from the fuel inlet 112 may have a relatively wide channel width (e.g., the widest of the first section 110a).

Similarly, one end of the second section 110b in a longitudinal direction, located relatively close to the fuel outlet 113 has a maximum channel width of the second section. As a distance thereof from the fuel outlet increases, the channel width wc2 of the second section gradually decreases. The other end of the second section 110b in the longitudinal direction, located relatively far from the fuel outlet has a minimum channel width of the second section.

Here, the maximum channel width of the first section 110a is smaller than the minimum channel width of the second section 110b.

The channel width wc1 of the first section 110a is smaller than the channel width wc3 of the third section 110c located between the first section and the second section of the fuel channel 111. Also, or alternatively, the channel width wc2 of the second section 110b is greater than the channel width wc3 of the third section.

At the same time, the channel width wc3 of the third section 110c may be gradually varied. For example, one end of the third section located close to the fuel inlet 112 in a longitudinal direction has a minimum channel width of the third section. The channel width of the third section gradually increases away from the fuel inlet and toward the fuel outlet 113. The other end of the third section located close to the fuel outlet in a longitudinal direction has a maximum channel width of the third section.

Here, the maximum channel width of the first section 110a is smaller than the minimum channel width of the third section 110c, while the minimum channel width of the second section 110b is greater than the maximum channel width of the third section 110c.

In each fuel channel 111, the first section 110a, the second section 110b, and the third section 110c may have the same length, but the present disclosure is not limited thereto.

As described above, at least two or more of the plurality of sections divided in each fuel channel 111 may have different channel widths wc, and the channel widths of the sections may gradually increase from the fuel inlet 112 to the fuel outlet 113. In other words, the channel width for each section in each fuel channel gradually narrows toward the fuel inlet and gradually widens toward the fuel outlet.

Also, or alternatively, a rib width wr corresponding to the first to third sections 110a to 110c in each rib 116 between adjacent fuel channels 111 may be changed in the longitudinal direction of the fuel channel 111, that is, in the longitudinal direction of the separator 110.

If described in more detail with reference to FIG. 8, the rib width wr1 of the first section 110a, located relatively close to the fuel inlet 112 in each rib 116 is greater than the rib width wr2 of the second section 110b, located relatively close to the fuel outlet 113.

At the same time, the rib widths wr1 and wr2 of the first section 110a and the second section 110b may be gradually varied.

For example, one end of the first section 110a in the longitudinal direction, located relatively close to the fuel inlet 112, has a maximum rib width of the first section. As a distance thereof from the fuel inlet increases, the rib width wr1 of the first section gradually decreases. The other end of the first section in the longitudinal direction, located relatively far from the fuel inlet, has a minimum rib width of the first section.

Similarly, one end of the second section 110b in the longitudinal direction, located relatively close to the fuel outlet 113 has a minimum rib width of the second section. As a distance thereof from the fuel outlet increases, the rib width wr2 of the second section gradually decreases. The other end of the second section in the longitudinal direction, located relatively far from the fuel outlet, has a maximum rib width of the second section.

Here, the minimum rib width of the first section 110a may have a greater size than the maximum rib width of the second section 110b.

The rib width wr1 of the first section 110a may be greater than a rib width wr3 of the third section 110c located between the first section and/or the second section of the rib 116. Also, or alternatively, the rib width wr2 of the second section 110b may be smaller than the rib width of the third section.

The rib width wr3 of the third section 110c may be gradually varied. For example, one end of the third section in the longitudinal direction, located close to the fuel inlet 112 may have a greater (e.g., greatest) rib width of the third section. The rib width of the third section decreases away from the fuel inlet and toward the fuel outlet 113. The other end of the third section in the longitudinal direction, located close to the fuel outlet, may have a smaller (e.g., smallest) rib width of the third section.

Here, the smallest rib width of the first section 110a may be greater than the greatest rib width of the third section 110c, while the greatest rib width of the second section 110b may be smaller than the smallest rib width of the third section 110c.

The first section 110a, the second section 110b, and the third section 110c of each rib 116 may have the same length, but the present disclosure is not limited thereto.

Two or more of the plurality of sections divided in each rib 116 may have different rib widths wr, and the rib widths of the sections may (e.g., gradually) decrease from the fuel inlet 112 to the fuel outlet 113. In other words, the rib width for each section in each rib may (e.g., gradually) widen toward the fuel inlet 112 and gradually narrow toward the fuel outlet 113.

In the first section 110a, located relatively close to the fuel inlet 112 and having a maximum rib width wr and a minimum channel width wc, a flow velocity of the fuel in the fuel channel 111 may increase in a flow direction, and a corresponding pressure drop may increase.

Conversely, in the second section 110b, located relatively close to the fuel outlet 113 and having a minimum rib width wr and a maximum channel width wc, a flow velocity of the fuel in the fuel channel 111 may decrease in the flow direction and a corresponding pressure drop may be reduced.

To uniformly supply fuel required at the reaction interface of the electrochemical cell 200, the pressure drop in each slit 121 provided in the fuel supply control panel 120 may be shared by the fuel channel 111 of the separator 110. Since the pressure drop in the separator 110 may first be increased, for example, the size of each slit 121 provided in the fuel supply control panel 120 may be increased, and the distance d between the slits 121 may be narrowed.

Also, or alternatively, in the fuel supply control device 100, the separator 110 may further include at least one cross channel 117 formed to across a plurality of fuel channels to communicate with the plurality of fuel channels 111.

The cross channel 117 may extend parallel to a width direction in the width direction of the separator 110. Also, or alternatively, the cross channel may pass across each fuel channel 111. Thus, the cross channel may separate sections having different rib widths wr in each rib 116.

The plurality of fuel channels 111 can communicate with each other due to the cross channel 117, and thus the separator 110 may more uniformly control the flow rate of fuel supplied to the electrochemical cell 200.

The fuel supply control panel 120 may be stacked and/or disposed on the inner surface of the separator 110 configured as described above. The fuel supply control panel may be configured to uniformly distribute and/or deliver the fuel flowing through the fuel channels 111 throughout the reaction site of the electrochemical cell 200.

The present disclosure provides a fuel supply control device for an electrochemical cell capable of uniformly distributing fuel supplied to the electrochemical cell and supplying the same.

The fuel supply control device for an electrochemical cell may include: a separator disposed on one side of an electrochemical cell and having a fuel inlet, a fuel outlet, and a plurality of fuel channels arranged between the fuel inlet and the fuel outlet; and a fuel supply control panel stacked between the separator and the electrochemical cell, and having a plurality of slits arranged in a longitudinal direction of the fuel channel, wherein a channel width of the fuel channel may be changed in the longitudinal direction of the fuel channel.

At least two or more of a plurality of sections divided in each fuel channel may have different channel widths, and the channel widths may be changed in a stepwise manner.

The channel width may increase in a stepwise manner from the fuel inlet to the fuel outlet.

A rib may be disposed between adjacent fuel channels, and a rib width of the rib may be changed in a stepwise manner in a longitudinal direction of the fuel channel.

The rib width may decrease in a stepwise manner from the fuel inlet to the fuel outlet.

$$wci = \frac{L - (n \times wri)}{n+1}$$

The channel width in each section may be determined by $wci = \frac{L-(n \times wri)}{n+1}$ , where wci may be the channel width in an $i^{th}$ section, L may be a length of the fuel inlet, n may be the number of the ribs, and wri may be the rib width in the $i^{th}$ section.

Two or more of the plurality of sections divided in each fuel channel may have different channel widths. The channel widths may be gradually and/or step-wise changed from section to section. The channel width may gradually increase from the fuel inlet to the fuel outlet.

A rib may be disposed between adjacent fuel channels, and a rib width of the rib may be gradually changed in a longitudinal direction of the fuel channel.

The rib width may gradually decrease from the fuel inlet to the fuel outlet.

The plurality of sections divided in each fuel channel may have the same length as each other.

The separator may further include at least one cross channel formed to across the plurality of fuel channels to communicate with the plurality of fuel channels.

A slit located relatively close to the fuel inlet may have a smaller slit width than a slit located relatively close to the fuel outlet.

A distance between slits located relatively close to the fuel inlet and having the same slit width as each other may be greater than a distance between slits located relatively close to the fuel outlet and having the same slit width as each other.

Each slit may extend in a direction, orthogonal to the fuel channel.

According to another aspect of the present disclosure, provided is a fuel supply control device for an electrochemical cell, the device including: a separator disposed on one side of an electrochemical cell, and having a fuel inlet, a fuel outlet, and a plurality of fuel channels arranged between the fuel inlet and the fuel outlet; and a fuel supply control panel stacked between the separator and the electrochemical cell, and having a plurality of slits arranged in a longitudinal direction of the fuel channel, wherein the fuel channel and the slit may extend in a direction intersecting each other, and at least one of a channel width of the fuel channel, a slit width of the slit, and a distance between a plurality of slits may be changed in the longitudinal direction of the fuel channel.

As set forth above, according to an example of the present disclosure, by uniformly distributing and supplying the fuel supplied to the electrochemical cell, a uniform electrochemical reaction may be induced across an entire reaction site of the electrochemical cell, thereby reducing a deviation in reaction for each site, and as a result, stability of the electrochemical cell and the performance during long-term operation may be improved.

The aforementioned description merely illustrates the technical concept of the present disclosure, and a person skilled in the art to which the present disclosure pertains may make various modifications and modifications without departing from the essential characteristics of the present disclosure.

Therefore, the examples disclosed in this specification and drawings are not intended to limit but to explain the technical concept of the present disclosure, and the scope of the technical idea of the present disclosure is not limited by these examples. The scope of protection of the present disclosure should be interpreted by the following claims, and all technical ideas within the scope equivalent thereto should be interpreted as being included in the scope of the present disclosure.

**Claims**

1. A fuel supply control device, for an electrochemical cell, comprising:

a separator disposed on one side of an electrochemical cell, wherein a fuel inlet, a fuel outlet, and a plurality of fuel channels are formed in the separator, wherein the plurality of fuel channels are arranged to extend between the fuel inlet and the fuel outlet; and
a fuel supply control panel stacked between the separator and the electrochemical cell, wherein a plurality of slits are formed in the fuel supply control panel and arranged in a longitudinal direction of the plurality of fuel channels, wherein one or more fuel channels of the plurality of fuel channels has a channel width that changes in a longitudinal direction of the one or more of the fuel channels.

2. The fuel supply control device of claim 1, wherein the channel width changes in a stepwise manner between sections of a plurality of sections of the one or more fuel channels.

3. The fuel supply control device of claim 1 or 2, wherein the channel width increases in the stepwise manner in a direction from the fuel inlet to the fuel outlet.

4. The fuel supply control device of anyone of claims 1-3, wherein a first rib is disposed between a fuel channel of the one or more fuel channels and an adjacent fuel channel of the plurality of fuel channels, and wherein a first rib width of the first rib changes in a stepwise manner in a longitudinal direction of the fuel channel of the one or more fuel channels.

5. The fuel supply control device of claim 4, wherein the first rib width decreases in a stepwise manner in a direction from the fuel inlet to the fuel outlet.

6. The fuel supply control device of claim 4 or 5, wherein each rib, of a plurality of ribs comprising the first rib:

is disposed between adjacent fuel channels of the plurality of fuel channels, and
has a rib width that changes in a stepwise matter in the longitudinal direction of the fuel channels,

wherein a channel width in an ith section of the plurality of sections is according to Equation 1:

$$wci = \frac{L \text{-} (n \times wri)}{n+1}$$

where wci is the channel width in the $i^{th}$ section, L is a length of the fuel inlet, n is a quantity of the plurality of ribs, and wri is the rib width in the $i^{th}$ section.

7. The fuel supply control device of claim 1, wherein two or more of a plurality of sections of the one or more fuel channels have different channel widths, and the different channel widths each gradually change in a longitudinal direction.

8. The fuel supply control device of claim 1 or 7, wherein each of the different channel widths gradually increase in a direction from the fuel inlet to the fuel outlet.

9. The fuel supply control device of anyone of claims 1, 7, 8, wherein a rib is disposed between a fuel channel of the one or more fuel channels and an adjacent fuel channel of the plurality of fuel channels, and wherein a rib width of the rib changes gradually in a longitudinal direction of the fuel channel of the one or more fuel channels.

10. The fuel supply control device of claim 9, wherein the rib width gradually decreases in a direction from the fuel inlet to the fuel outlet.

11. The fuel supply control device of anyone of claims 1-10, wherein each fuel channel of the one or more fuel channels is divided into a plurality of sections each having a same length.

12. The fuel supply control device of anyone of claims 1-11, wherein at least one cross channel is formed across the plurality of fuel channels, such that the at least one cross channel is configured to allow fuel to flow between the plurality of fuel channels.

13. The fuel supply control device of anyone of claims 1-12, wherein a slit, of the plurality of slits, located closer to the fuel inlet has a smaller slit width than a slit, of the plurality of slits, located closer to the fuel outlet.

14. The fuel supply control device of claim 13, wherein a distance between adjacent slits, of the plurality of slits, located closer to the fuel inlet is greater than a distance between adjacent slits, of the plurality of slits, located closer to the fuel outlet.

15. The fuel supply control device of anyone of claims 1-14, wherein each slit of the plurality of slits extends in a direction orthogonal to the plurality of fuel channels.

100

120

121a
121c
121
121b

114
112
110

117
116
111
115
113

FIG. 1

FIG. 2

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

Application Number

EP 23 20 9049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/186226 A1 (HTCERAMIX SA [CH]) 19 December 2013 (2013-12-19) | 1,2,7, 11,15 | INV. C25B1/042 C25B9/77 |
| A | * figure 5 * | 3-6, 8-10, 12-14 | C25B15/08 |
| Y | WO 2022/106874 A1 (ECOLE POLYTECHNIQUE FED LAUSANNE EPFL [CH]) 27 May 2022 (2022-05-27) | 1,2,7, 11,15 | |
| A | * figure 1c * | 3-6, 8-10, 12-14 | |

TECHNICAL FIELDS
SEARCHED        (IPC)

C25B

The present search report has been drawn up for all claims

| Place of search | Date of completion of the search | Examiner |
|---|---|---|
| Munich | 19 August 2024 | Thorner, Gentien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 484 613 A1

## ANNEX TO THE EUROPEAN SEARCH REPORT
## ON EUROPEAN PATENT APPLICATION NO.

EP 23 20 9049

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | Publication date | Patent family member(s) | Publication date |
|---|---|---|---|
| WO 2013186226 A1 | 19-12-2013 | AU 2013276596 A1 | 04-12-2014 |
| | | CA 2874946 A1 | 19-12-2013 |
| | | CN 104412434 A | 11-03-2015 |
| | | DK 2859608 T3 | 30-07-2018 |
| | | EP 2675005 A1 | 18-12-2013 |
| | | EP 2859608 A1 | 15-04-2015 |
| | | ES 2678599 T3 | 14-08-2018 |
| | | JP 6167174 B2 | 19-07-2017 |
| | | JP 2015525447 A | 03-09-2015 |
| | | KR 20150029642 A | 18-03-2015 |
| | | PL 2859608 T3 | 31-10-2018 |
| | | RU 2014149663 A | 27-07-2016 |
| | | SI 2859608 T1 | 28-09-2018 |
| | | TR 201809360 T4 | 23-07-2018 |
| | | US 2015180061 A1 | 25-06-2015 |
| | | US 2017229722 A1 | 10-08-2017 |
| | | WO 2013186226 A1 | 19-12-2013 |
| WO 2022106874 A1 | 27-05-2022 | EP 4247997 A1 | 27-09-2023 |
| | | US 2024102185 A1 | 28-03-2024 |
| | | WO 2022106874 A1 | 27-05-2022 |

EPO FORM P0459

For more details about this annex : see Official Journal of the European Patent Office, No. 12/82